# EUROPÄISCHE PATENTSCHRIFT

(11) **EP 0 730 288 B1**
(45) Veröffentlichungstag und Bekanntmachung des Hinweises auf die Patenterteilung: **17.05.2000**
(21) Anmeldenummer: 96100435.5
(22) Anmeldetag: 12.01.1996
(51) Int. Cl.: H01H 85/02, H05K 13/02, B23P 19/00

(54) **Verfahren zum Bestücken eines Sicherungskastens mit elektrischen Stecksicherungen**
Method for providing a fuse box with electrical fuses
Méthode pour équiper une boîte à fusibles avec des fusibles électriques

(30) Priorität: 03.03.1995 DE 19507550
(43) Veröffentlichungstag der Anmeldung: 04.09.1996
(73) Patentinhaber: Gluth Systemtechnik GmbH, 94315 Straubing (DE); Lisa Dräxlmaier GmbH, 84137 Vilsbiburg (DE)
(72) Erfinder: Greiner, Walter, D-94315 Straubing (DE); Dräxlmeier jun., Fritz, D-84137 Vilsbiburg (DE)
(74) Vertreter: Grünecker, Kinkeldey, Stockmair & Schwanhäusser Anwaltssozietät

(56) Entgegenhaltungen:
- DE-U- 8 525 957
- FR-A- 2 662 622
- GB-A- 2 280 069
- US-A- 4 356 626
- US-A- 4 815 202

## Beschreibung

Die Erfindung bezieht sich auf ein Verfahren zum Bestücken eines Sicherungskastens mit elektrischen Stecksicherungen, insbesondere für Kraftfahrzeuge, bei denen die Stecksicherungen von einer Bereitstellungseinrichtung über einen im Querschnitt an die Form der Stecksicherungen angepaßten Zuführschlauch einem Bestückungskopf zum Einstecken der Stecksicherungen in Stecksockeln zugeführt werden, wobei der Zuführschlauch in den Bestückungskopf mündet.

Ein derartiges Verfahren ist z.B. aus der US-A-30 15 881 bekannt. Dort werden Kondensatoren von einer Bereitstellungseinrichtung über einen flexiblen Schlauch einem Bestückungskopf zugeführt. Die Bereitstellungseinrichtung ist oberhalb des Bestückungskopfes angeordnet. Die Kondensatoren werden durch die in der Art einer Schütte ausgebildete Bereitstellungseinrichtung in den Schlauch entleert, wo sie durch ihre Schwerkraft dem Bestückungskopf zugeführt werden. In Bestückungskopf werden die Kondensatoren vereinzelt und wird jeweils ein Kondensator an eine bestimmte Stelle jeweils einer Platine montiert. Wenn dieses Verfahren zum Bestücken eines Sicherungskastens mit einer Vielzahl von Stecksockeln verwendet wird, ist jeweils eine Vorrichtung pro Stecksockel und Stecksicherung erforderlich. Da sich dieses Verfahren aufgrund des erforderlichen hohen technischen Aufwandes zum Bestücken eines Sicherungskastens sehr kostenaufwendig wäre, wurden Sicherungskästen bislang hauptsächlich manuell mit elektrischen Stecksicherungen bestückt. Diese Arbeitsweise erweist sich jedoch als personal- und zeitaufwendig, wodurch ebenfalls hohe Bestückungskosten entstehen.

Um den ständig steigenden Anforderungen bezüglich kürzerer Bestückungszeiten und geringerer Kosten gerecht zu werden, ist es Aufgabe der Erfindung, ein Verfahren zum Bestücken eines Sicherungskastens mit elektrischen Stecksicherungen zu schaffen, das es ermöglicht, die Bestückungszeiten sowie die Bestückungskosten deutlich herabzusetzen.

Die Aufgabe wird erfindungsgemäß dadurch gelöst, daß der Bestückungskopf gegenüber der Bereitstellungseinrichtung verfahrbar angeordnet ist und zum Bestücken von mehreren Stecksockeln des Sicherungskastens mit ihren jeweils zugeordneten Stecksicherungen in unterschiedliche Positionen verfahren wird, in denen jeweils die Stecksicherungen in die zugehörigen Stecksockel eingesteckt werden, und das zum Fördern der Stecksicherungen mittels einer Fördereinrichtung Luft durch den Zuführschlauch gefördert wird.

Diese Lösung ist einfach und hat den Vorteil, daß die Bestückungszeit für die Stecksicherungen deutlich herabgesetzt werden kann, da das Zuführen der Stecksicherungen durch Druckluft sehr kurze Zuführzeiten ermöglicht. Darüberhinaus wird durch das erfindungsgemäße Verfahren der erforderliche technische Aufwand zum Bestücken eines Sicherungskastens mit Stecksicherungen erheblich reduziert, da es nunmehr möglich ist, mit nur einer Vorrichtung unterschiedliche Steckplätze eines Sicherungskastens zu bestücken.

Insbesondere bei der Handhabung der Stecksicherungen kann es sich als besonders vorteilhaft erweisen, wenn die Stecksicherungen einzeln durch den Zuführschlauch gefördert werden. Dadurch läßt sich ein Ineinanderhaken von Stecksicherungen vermeiden.

Die Flexibilität einer zum Bestücken eines Sicherungskastens mit elektrischen Stecksicherungen vorgesehene Anlage läßt sich vergrößern, wenn Stecksicherungen unterschiedlicher Ampèrè Werte, jedoch mit im wesentlichen gleichen Abmessungen durch den Zuführschlauch gefördert werden. Dadurch können Stecksicherungen unterschiedlicher Ampèrè Werte mit dem gleichen Bestückungskopf in die Stecksockel eingesteckt werden.

Zur Handhabung der Stecksicherungen kann es sich als vorteilhaft erweisen, wenn die Stecksicherungen mittels Ladevorrichtungen aus Bevorratungseinrichtungen der Bereitstellungseinrichtung zugeführt werden, um durch den Zuführschlauch gefördert zu werden. Dabei kann es logistisch vorteilhaft sein, wenn jeweils in einer Bevorratungseinrichtung Stecksicherungen eines Ampèrè Wertes aufgenommen werden und jeweils eine Bevorratungseinrichtung einer Ladevorrichtung zugeordnet wird, die die Stecksicherungen der Bereitstellungseinrichtung zuführt. Dadurch läßt sich eine einfache Steuerung verwirklichen, die es ermöglicht, jeweils Stecksicherungen eines bestimmten Ampèrè Wertes der Bereitstellungseinrichtung zuzuführen.

Zur Handhabung der Stecksicherungen kann es sich als vorteilhaft erweisen, wenn die Stecksicherungen zunächst der Bereitstellungseinrichtung zugeführt und vereinzelt werden und anschließend durch Zuführen von Druckluft durch den Zuführschlauch gefördert werden. Dadurch läßt sich ein Verkanten der Stecksicherungen im Zuführschlauch während des Zuführens verhindern.

Zur Verkürzung der Bestückungszeit kann es sich als vorteilhaft erweisen, wenn während des Bestückens einer der Stecksicherungen durch den Bestückungskopf einer Stecksicherung des als nächsts zu montierenden Ampèrè Wertes der Bereitstellungseinrichtung zugeführt wird. Auf diese Weise können Vorgänge des Bestückens und des Zuführens parallel geschaltet werden. Ebenso kann es dabei von Vorteil sein, wenn das Positionieren des Bestückungskopfes während des Zuführens der als nächstes zu montierenden Stecksicherung zur Bereitstellungseinrichtung erfolgt. Dadurch läßt sich die Bestückungszeit weiter verkürzen. Dabei kann es auch von Vorteil sein, wenn die Stecksicherung erst nach dem die vorangegangene Stecksicherung den Bestückungskopf verlassen hat, durch den Zuführschlauch gefördert wird. Zur Handhabung der Stecksicherungen kann es sich in einer vorteilhaften Weiterbildung der Erfindung als günstig erweisen, wenn die durch den Zuführschlauch geförderte Stecksicherung zunächst durch eine sich in einer Fangstellung befindenden Fangeinrichtung aufgefangen wird, wobei Fangflächen der Fangeinrichtung sich im Eingriff mit der Stecksicherung befinden und anschließend eine Haltevorrichtung von einer Losstellung, in welcher Greifelemente von der Stecksicherung beabstandet sind, in einer Haltestellung überführt wird, in welcher die Greifelemente an der Stecksicherung anliegen und diese festhalten und anschließend die Fangeinrichtung in eine Freigabestellung überführt wird, in welcher die Fangflächen die Stecksicherung freigeben. Auf diese Weise wird die genaue Einsetzposition eingehalten. Zudem kann es sich dabei als vorteilhaft erweisen, wenn zum Einsetzten der Stecksicherung in den Stecksockel die sich in Haltestellung befindliche Halteeinrichtung von einer ersten Stellung, in welcher die Stecksicherung vom Sockel beabstandet ist, an die zweite Stellung überführt wird, in welcher die Stecksicherung in den Stecksockel eingesteckt ist.

Zudem hat es sich als günstig erwiesen, wenn während des Bestückensvorganges der Sicherungskasten genau positioniert und arretiert ist. Auch damit lassen sich Fehler während des Bestückungsvorganges vermeiden.

Desweiteren bezieht sich die Erfindung auf eine Vorrichtung zum Durchführen des erfindungsgemäßen Verfahrens, zum Bestücken eines Sicherungskastens, insbesondere für Kraftfahrzeuge, mit elektrischen Stecksicherungen, welche Vorrichtung eine Bereitstellungseinrichtung zum Bereitstellen der Stecksicherungen aufweist, die über einen im Querschnitt an die Form der Stecksicherung angepaßten Zuführschlauch mit einem Bestückungskopf verbunden ist, wobei der Zuführschlauch in den Bestückungskopf mündet und die Stecksicherung über den Zuführschlauch von der Bereitstellungseinrichtung den Bestückungskopf zuführbar sind, wobei der Bestückungskopf zum Bestücken von mehreren Stecksockeln des Sicherungskastens mit ihren jeweils zugeordneten Stecksicherungen gegenüber der Bereitstellungseinrichtung in verschiedene Positionen verfahrbar ist, in denen jeweils die Stecksicherungen in die zugehörigen Stecksockeln einsteckbar sind und daß eine Fördereinrichtung zum Fördern von Luft durch den Zuführschlauch vorgesehen ist, wobei ein Fördern der Luft ein Fördern der Stecksicherung durch den Zuführschlauch bewirkt.

Mit einer solchen Vorrichtung läßt sich das erfindungsgemäße Verfahren in besonders vorteilhafter Weise durchführen.

Zur Handhabung der Stecksicherungen kann es sich dabei als vorteilhaft erweisen, wenn in der Bereitstellungseinrichtung zumindest eine der Stecksicherungen in einer vorherbestimmten Stellung bereitstellbar ist, um dem Zuführschlauch zuführbar zu sein.

In einer vorteilhaften Weiterbildung der Erfindung können in der Bereitstellungseinrichtung zumindest eine Ladeeinrichtung vorgesehen sein, die von einer Ladestellung, in welcher die Ladeeinrichtung eine Stecksicherung aufnehmen kann, in eine Zuführstellung überführbar ist, die welche eine Stecksicherung in der vorherbestimmten Lage in der Bereitstellungseinrichtung bereitgestellt ist.

Darüberhinaus ist es günstig, wenn mehrere Ladeeinrichtungen vorgesehen sind, wovon jeweils nur eine sich in der Zuführstellung befindet. Durch das Vorhandensein mehrerer Ladeeinrichtungen können unterschiedliche Stecksicherungen zugeführt werden. Insbesondere kann es dabei günstig sein, wenn Stecksicherungen unterschiedliche Ampèrè Werte zuführbar sind, deren äußere Form jeweils im wesentlichen identisch ist, wobei jeweils nur eine Stecksicherung eines Ampèrè Wertes zumindest einer Ladeeinrichtung zugeordnet ist. Dadurch lassen sich Stecksicherungen unterschiedlicher Ampèrè Werte der Bereitstellungseinrichtung zuführen. Die Flexibilität der Vorrichtung hinsichtlich der zu verarbeitenden Stecksicherungen läßt sich dadurch steigern.

Von Vorteil kann es dabei sein, wenn jeweils nur eine Stecksicherung des als nächsten zu montierenden Ampèrè Wertes bereitstellbar ist.

Eine konstruktiv einfache Lösung erhält man, wenn die Ladeeinrichtungen als Schieber ausgebildet sind, die im wesentlichen quer zur Förderrichtung der Stecksicherung von der Ladestellung in die Zuführstellung überführbar sind.

Als vorteilhaft kann es sich dabei erweisen, wenn die Schieber entlang eines in der Bereitstellungseinrichtung vorgesehenen Kanales im wesentlichen hintereinander angeordnet sind, welcher Kanal in den Zuführschlauch mündet. Man erhält dadurch eine kompakte Anordnung die einfach herzustellen ist.

Zu dem kann es von vorteil sein, wenn die Schieber zumindest eine im wesentlichen topfförmige Aufnahme zur Aufnahme einer Stecksicherung aufweisen, und der in Förderrichtung rückwärtige Boden der Aufnahme mit einer Öffnung versehen ist. Auf diese Weise kann der Schieber in seiner Zuführstellung verbleiben, während die Luft durch die Öffnung der topfförmigen Aufnahme eindringt und die darin befindliche Stecksicherung aus der topfförmigen Aufnahme über den Zuführschlauch in den Bestükkungskopf fördert. Dadurch werden keine zusätzlichen Halterungen für die Stecksicherungen in der vorherbestimmten Lage in der Bereitstellungseinrichtung erforderlich.

Darüberhinaus kann es sich als günstig erweisen, wenn Bevorratungseinrichtungen vorgesehen sind, aus welchen den Ladeeinrichtungen in der Ladestellung Stecksicherungen zuführbar sind. Dadurch läßt sich der Automatisierungsgrad der Vorrichtung erhöhen. Ein Vorteil kann es dabei sein, wenn jeweils eine Bevorratungseinrichtung einer Ladeeinrichtung zugeordnet ist. Durch Anwählen der zugeordneten Ladeeinrichtung läßt sich somit immer die gewünschte Stecksicherung der Bereitstellungseinrichtung zuführen. Für die Bevorratungseinrichtungen können sich Schwingförderer als günstig erweisen.

Eine kompakte Gestaltung der Anlage läßt sich erzielen, wenn die Einrichtung zum Fördern der Luft eine Pumpe ist, die die Luft durch eine Einblaßöffnung in am in Förderrichtung rückwärtigen Ende des Kanals der Bereitstellungseinrichtung fördert.

Beim Fördern der Stecksicherung durch den Zuführschlauch kann es sich als vorteilhaft erweisen, wenn die Stecksicherung mit ihren Kontakten in Förderrichtung nach vorne weisend angeordnet ist.

Um ein Knicken des Zuführschlauches zu vermeiden, kann es sich als günstig erweisen, wenn der Zuführschlauch im wesentlichen bogenförmig von der Bereitstellungseinrichtung zum Bestückungskopf verläuft.

Zu dem kann es sich als vorteilhaft erweisen, wenn das Einstekken der Stecksicherung in den Stecksockel in im wesentlichen vertikaler Richtung erfolgt und der Zuführschlauch bestückungskopfseitig im wesentlichen parallel zur Steckrichtung verläuft. Zudem kann es dabei vorteilhaft sein, wenn der Kanal der Bereitstellungseinrichtung im wesentlichen vertikal verläuft und der Zuführschlauch bereitstellungseinrichtungsseitig im wesentlichen parallel zur Längsachse des Kanals verläuft. Wenn dabei der höchste Punkt des Zuführschlauches zwischen Bestückungskopf und Bereitstellungseinrichtung angeordnet ist, wird ein Verstopfen des Zuführschlauches durch Stecksicherungen vermieden.

Darüberhinaus kann es vorteilhaft sein, wenn der Zuführschlauch im wesentlichen rechteckig im Querschnitt ist. Diese Form entspricht im Querschnitt der Stecksicherungen und verbessert die Förderwirkung der Luft auf die Stecksicherungen.

Als Herstellungsmaterial für den Zuführschlauch kann sich insbesondere flexibler Kunststoff als günstig erweisen.

Darüberhinaus kann eine Positioniereinrichtung für den Bestükkungskopf vorgesehen sein, um den Bestückungskopf in einer Einsteckstellung zum Sicherungskasten anzuordnen, in welcher die Sicherungen in die Stecksockel des Sicherungskastens einsteckbar sind. Von Vorteil kann es dabei sein, wenn die Positioniereinrichtung zwei im wesentlichen rechtwinklig zueinander angeordnete Positionierachsen aufweist und die Positionierachsen im wesentlichen horizontal angeordnet sind. Auf diese Weise läßt sich eine kostengünstige Positionierung des Bestückungskopfes erreichen.

In einer vorteilhaften Weiterbildung der Erfindung kann der Bestückungskopf zusätzlich eine Fangeinrichtung zum Auffangen der an dem Zuführschlauch austretenden Stecksicherungen sowie eine Halteeinrichtung zum Halten der Stecksicherungen während des Einsteckens in Steckrichtung aufweisen. Auf diese Weise wird ein Verkanten der aus dem Zuführschlauch austretenden Stecksicherungen verhindert. In vorteilhafter Weise kann zudem die Halteeinrichtung in Steckrichtung bewegbar sein, um die Stecksicherungen in den Sockel des Sicherungskastens einzusetzen.

Eine besonders kostengünstig und einfach herzustellende Fangeinrichtung läßt sich realisieren, wenn die Fangeinrichtung zwei Fangflächen aufweist, die von einer Fangstellung, in welcher die Fangflächen mit kopfseitigen Vorsprüngen der Stecksicherung in Eingriff sich befinden, wobei die aus dem Zuführschlauch ausgetretende Stecksicherung sich im wesentlichen in Förderrichtung an den Fangflächen abstützt, in eine Freigabestellung überführbar sind, in welcher die Fangflächen weiter voneinander beabstandet sind als in der Fangstellung, so daß die Stecksicherung freigegeben ist. Dadurch läßt sich die Stecksicherung nach dem Austreten aus dem Zuführschlauch zunächst in einer vorgegebenen Lage orientieren, um anschließend in den Stecksockel eingesteckt zu werden.

Zudem können in einer vorteilhaften Weiterbildung der Erfindung die Halteeinrichtungen Greifelemente aufweisen, die stirnseitig am Kopf handelsüblicher Stecksicherungen angreifen und von einer Haltestellung, in welcher die Greifelemente die Stecksicherung zum Einstecken hält, in eine Losstellung überführbar sein, in welcher die Greifelemente und die Stecksicherung voneinander getrennt sind. Dadurch läßt sich die Stecksicherung genau positionieren und problemlos in den Stecksockel einstecken.

Zudem kann es von Vorteil sein, wenn die Greifelemente Halteflächen aufweisen, an denen sich die Stecksicherung beim Einstecken entgegen der Steckrichtung abstützt.

Um die Positionierung von Stecksicherung und Sockel während des Bestückens sicherzustellen, kann der Sicherungskasten mit einer Transportvorrichtung wirkungsverbunden sein, welche den Sicherungskasten zumindest in der Einsteckstellung zum Bestückungskopf arretiert.

Im folgenden wird die Erfindung anhand eines Ausführungsbeispieles näher beschrieben.

Es zeigen:
- Fig. 1: die erfindungsgemäße Vorrichtung in einer schematisch dargestellten Draufsicht,
- Fig. 2: die Vorrichtung aus Figur 1 in einer Seitenansicht,
- Fig. 3: eine Stecksicherung in einer perspektivischen Darstellung,
- Fig. 4: die Stecksicherung aus Figur 3 in einer Vorderansicht,
- Fig. 5: die Stecksicherung aus Figur 3 in einer Seitenansicht mit teilweise dargestellten Stecksockel,
- Fig. 6: den Sicherungskasten in einer schematisch dargestellten Draufsicht,
- Fig. 7: die Bereitstellungseinrichtung in einer geschnittenen, schematisch dargestellten Draufsicht,
- Fig. 8: einen Bestückungskopf in einer geschnittenen Vorderansicht entlang der Linie VIII-VIII,
- Fig. 9: den Bestückungskopf aus Figur 7 in einer geschnittenen Seitenansicht entlang der Linie IX-IX.

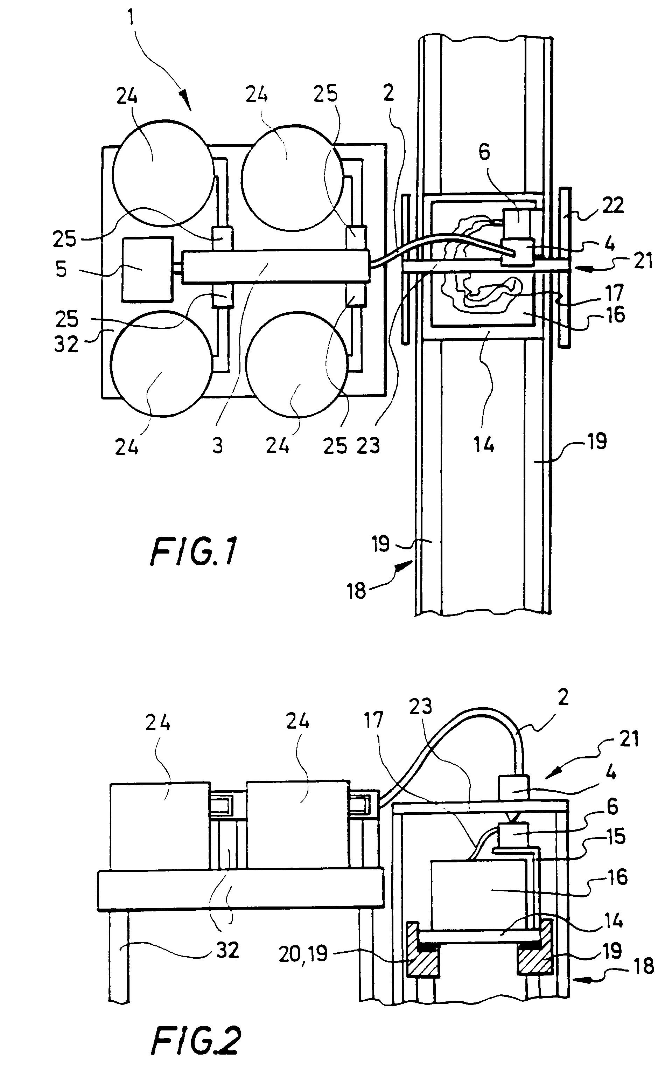

Figur 1 zeigt die erfindungsgemäße Vorrichtung 1 in einer schematisch dargestellten Draufsicht. Wie Figur 1 entnehmbar ist, weist die Vorrichtung 1 einen Zuführschlauch 2 auf, der eine Bereitstellungseinrichtung 3 mit einen Bestückungskopf 4 verbindet. Der Zuführschlauch 2 weist einen rechteckigen Querschnitt auf und besteht aus flexiblem Kunststoff.

In die Bereitstellungseinrichtung 3 mündet eine Pumpe 5, zum Fördern von Druckluft durch die Bereitstellungseinrichtung 3, durch den Zuführschlauch 2 in den Bestückungskopf 4.

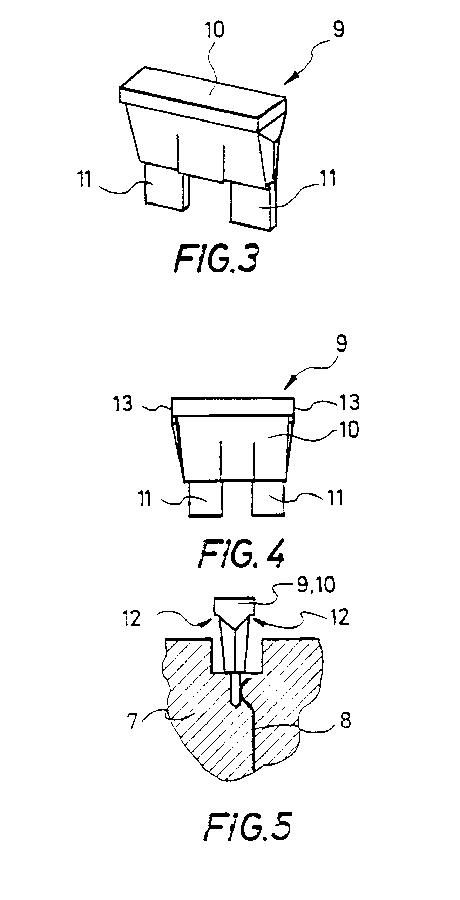

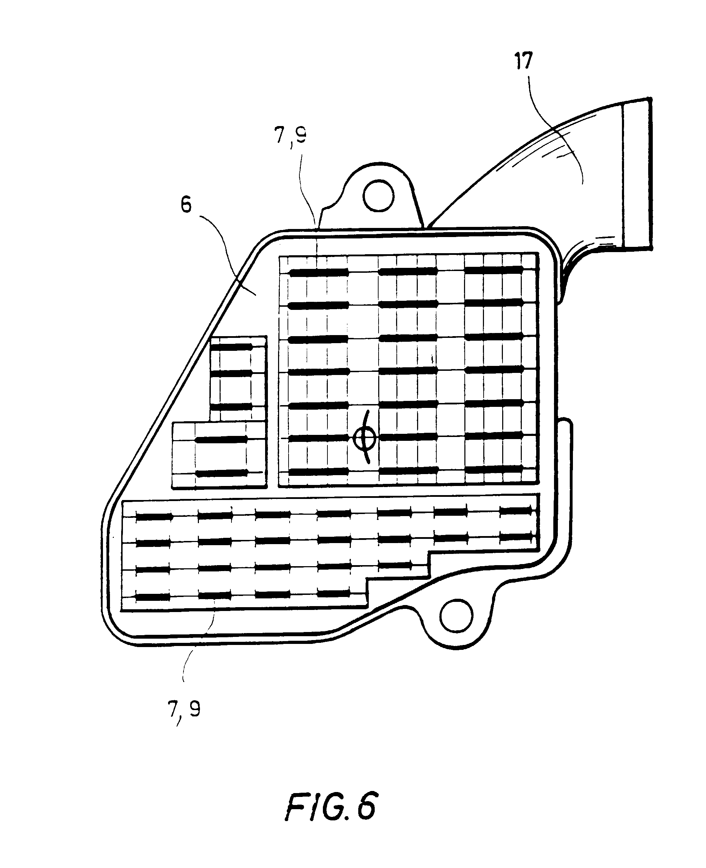

Der Bestückungskopf 4 befindet sich oberhalb eines Sicherungskastens 6, in welchem Stecksockel 7 mit Kontakten 8 vorgesehen sind, wie dies in Figur 5 schematisch dargestellt ist. Der Sicherungskasten 6 ist in seiner Draufsicht im wesentlichen quadratisch, wobei die Stecksockel 7 in mehreren Reihen angeordnet sind. Die Anzahl der Stecksockel kann zwischen 10 und 40 betragen. In die Stecksockel sind Stecksicherungen 9 einsteckbar, die einen vorzugsweise aus Kunststoff bestehenden Kopf 10 und daraus vorstehende Kontakte 11 aufweisen. Die Kontakte 11 sind im Innern des Kopfes 10 über einen nicht dargestellten Schmelzdraht miteinander verbunden. Wie insbesondere aus den Figuren 3 und 5 erkennbar ist, verfügen die Stecksicherungen 9 über Vorsprünge 12 am Kopf 10, sowie über stirnseitige Halteflächen 13, wie aus den Figuren 3 und 4 ersichtlich ist. Die Stecksicherungen 9 werden mit ihren Kontakten 11 in die Stecksockel 7 eingesteckt, wobei die Kontakte 11 der Stecksicherungen 9 jeweils mit den Kontakten 8 im Stecksockel 7 in Kontakt gebracht werden. Wie aus Figur 6 erkennbar ist, sind die eingesteckten Stecksicherungen 9 entsprechend der Anordnung der Stecksockel 7 in mehreren Reihen nebeneinander angeordnet.

Zum Bestücken mit Stecksicherungen 9 ist der Sicherungskasten 6 auf einem Werkstückträger 14 auf einer Halterung 15 montiert.

Auf dem Werkstückträger 14 befindet sich zusätzlich noch ein Behälter 16 zur Aufnahme von Kabeln, welche bereits an dem Sicherungskasten 6 vormontiert sind. Der Werkstückträger 14 wird durch eine schematisch dargestellte Transportvorrichtung 18, welche einen Bandförderer 19 umfaßt in den Arbeitsbereich der erfindungsgemäßen Vorrichtung hinein und wieder hinaus befördert. Zum Bestücken des Sicherungskastens 6 mit Stecksicherungen 9 ist eine nicht dargestellte Indexiereinrichtung 20 vorgesehen, mit welcher der Werkstückträger 14 relativ zum Bestükkungskopf 4 positioniert bzw. arretiert wird. Zusätzlich ist eine Positioniereinrichtung 21 vorgesehen, die zwei rechtwinklig zueinander, horizontal angeordnete programmierbare Linearachsen 22 und 23 aufweist, wobei der Bestückungskopf 4 auf der Linearachse 23 fest montiert ist.

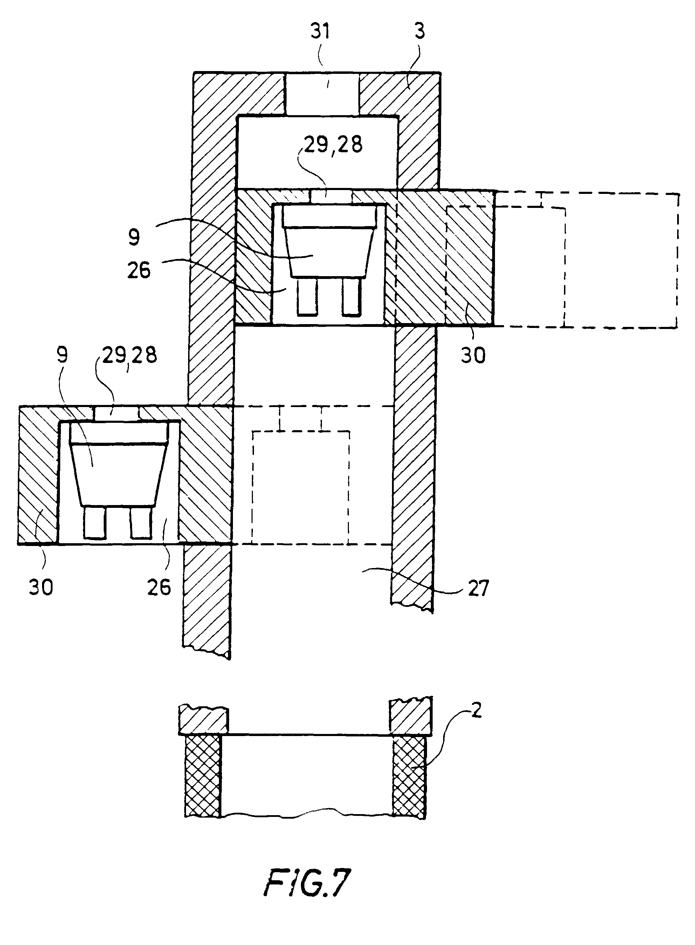

Wie in Figur 1 schematisch dargestellt ist, weist die Vorrichtung 1 Bevorratungseinrichtungen 24 auf, die als Vibrationswendelförderer ausgebildet sind. Jede der Bevorratungseinrichtungen 24 nimmt Stecksicherungen 9 auf, wobei jede der Bevorratungseinrichtungen jeweils Stecksicherungen 9 eines bestimmten Ampèrè Wertes aufnimmt. Somit ist die Vorrichtung dafür eingerichtet, vier verschiedene Stecksicherungen 9 aufzunehmen, wobei jeweils Stecksicherungen 9 eines Ampèrè Wertes in jeweils einer Bevorratungseinrichtung aufgenommen sind. Die Stecksicherungen 9 unterschiedlicher Ampèrè Werte unterscheiden sich nur durch den nicht dargestellten Schmelzdraht und sind ansonsten äußerlich von gleichen Abmessungen. Jedoch können die Köpfe 10 der Stecksicherungen 9 eine zur Unterscheidung entsprechend ihrer Ampèrè Werte unterschiedliche Färbungen aufweisen, wobei jeweils einer Farbe ein Ampèrè Wert zugeordnet ist. Wie aus Figur 7 besser ersichtlich ist, werden die Stecksicherungen 9 jeweils einer Ladeeinrichtung 25 zugeführt. Die Ladeeinrichtung 25 kann von einer Ladestellung in eine Zuführstellung überführt werden. In der Ladestellung befindet sich eine Aufnahme 26 außerhalb eines Kanales 27 der Bereitstellungseinrichtung 3. In dieser Stellung kann aus dem Vibrationswendelförderer eine Stecksicherung 9 in die Aufnahme 26 eingesetzt werden. Der erforderliche Einsetzmechanismus ist der Übersichtlichkeit halber nicht dargestellt. In der Zuführstellung befindet sich die Aufnahme 26 innerhalb des Kanales 27. Ein Boden 28 der Aufnahme weist eine Öffnung 29 auf. Durch die Öffnung 29 kann in der Zuführstellung durch die als Schieber 30 ausgebildeten Ladeeinrichtung 25 Luft geleitet werden. Wie weiterhin aus Figur 7 ersichtlich ist, verschließt der Schieber 30 in der Ladestellung den Kanal 27. In Figur 7 sind nur zwei Schieber 30 dargestellt, jedoch ist jeder der Bevorratungseinrichtungen 24 ein Schieber 30 zugeordnet. Die Schieber 30 sind hintereinander angeordnet entlang des Kanales 27. Der Kanal 27 verfügt über eine rückwärtige Einblasöffnung 31, durch welche die Pumpe 5 Druckluft in den Kanal 27 einbläst. Weiterhin mündet der Kanal 27 in den Zuführschlauch 2. Die durch die Pumpe 5 geförderte Luft kann somit durch die Einblasöffnung 31 und die Öffnung 29 des Schiebers 30 durch den Kanal 27 in den Zuführschlauch 2 eingeleitet werden. Das Fördern der Stecksicherungen 9 erfolgt entlang des Kanales 27 in Richtung zum Zuführschlauch 2. Wie aus Figur 7 ersichtlich ist, sind die Kontakte 11 der Stecksicherungen 9 in Förderrichtung gesehen nach vorn weisend angeordnet.

Damit ein störungsfreies Fördern der Stecksicherungen 9 möglich ist, befindet sich jeweils nur einer der Schieber 30 in der Zuführstellung, während die anderen Schieber 30 den Kanal 27 veschließen bzw. bilden.

Die Anordnung aus Bevorratungseinrichtungen 24, Bereitstellungseinrichtung 3, Pumpe 5, und Ladeeinrichtungen 25 ist auf einem Tisch 32 angeordnet und dort mittels mehrerer nicht näher beschriebener Befestigungsbauteilen befestigt.

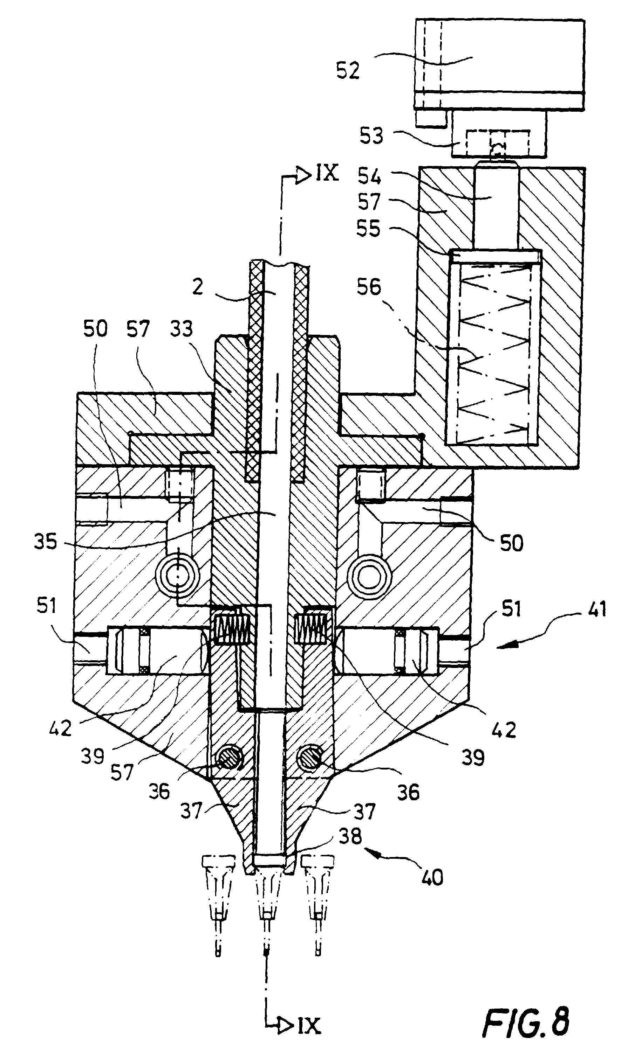

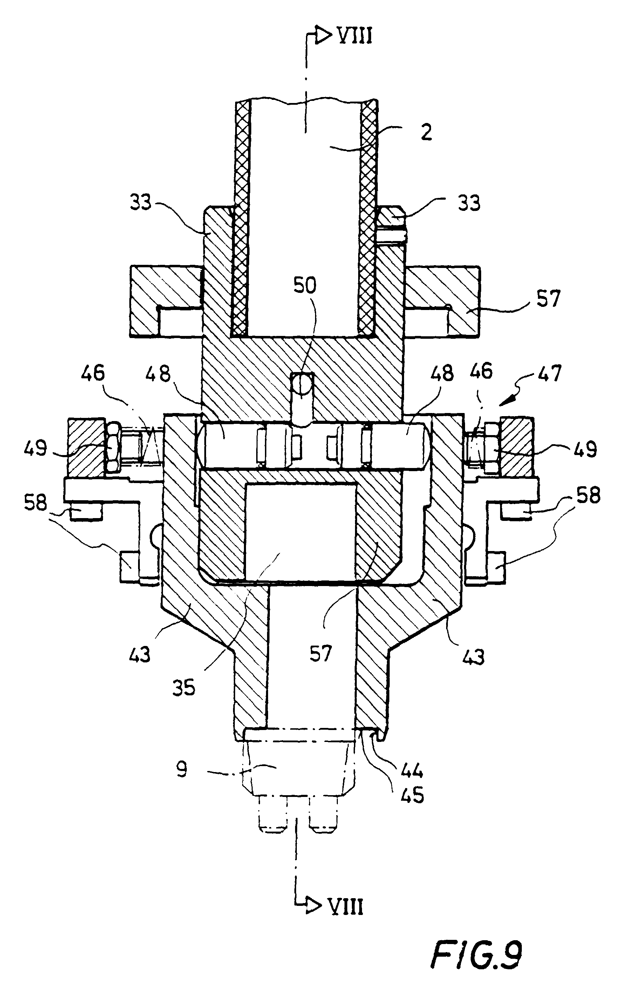

Wie aus Figur 2 hervorgeht, mündet der Zuführschlauch 2 aus dem Kanal 27 heraus und ist in einem Bogen zum Bestückungskopf 4 geführt, in welchen er einmündet. Der höchste Punkt des Zuführschlauches befindet sich dabei in etwa zwischen der Bereitstellungseinrichtung 3 und dem Bestückungskopf 4. Der Zuführschlauch 2 ist im Querschnitt im wesentlichen rechteckig und entspricht im wesentlichen der Form der Stecksicherungen 9. Der Querschnitt des Zuführschlauches 2 ist dabei insbesondere den Figuren 8 und 9 entnehmbar.

Wie insbesondere aus Figur 8 erkennbar ist, ist der Zuführschlauch 2 im Bestückungskopf 4 in einer Manschette 33 mit Madenschraube 34 gehalten. Der Zuführschlauch 2 mündet in einen Leitkanal 35 im Bestückungskopf 4. Am Ende des Leitkanales 35 befinden sich durch zwei Bolzen 36 schwenkbar gelagerte Schwenkelemente 37, die an ihren Enden Fangflächen 38 aufweisen. Die Schwenkelemente 37 werden durch Federn 39 in einer Fangstellung vorgespannt, in welcher die Fangflächen 38 derart voneinander beabstandet sind, daß sie sich mit den Vorsprüngen 12 des Kopfes 10 einer Stecksicherung 9 in Eingriff befinden. Die Schwenkelemente 37, die Fangflächen 38 und die Federn 39 bilden zusammen eine Fangeinrichtung 40. Zusätzlich ist eine Betätigungseinrichtung 41 vorgesehen, mit welcher die Fangeinrichtung 40 von der Fangstellung in eine Freigabestellung überführbar ist, in welcher die Fangflächen 38 derartig weit voneinander beabstandet sind, daß die Stecksicherung 9 freigegeben ist. Die Betätigungseinrichtung 41 besteht dabei aus zwei Kolben 42, die jeweils druckluftbetätigt auf die den Fangflächen abgewandten Enden der Schwenkelemente 37 wirken und dabei die Schwenkelemente 37 um die Bolzen 36 schwenken. In Figur 8 ist die Fangeinrichtung 40 halbseitig in der Fangstellung und halbseitig in der Freigabestellung dargestellt. Die Betätigung der Betätigungseinrichtung 41 erfolgt durch Druckluft.

Aus Figur 9 ist erkennbar, daß zwei parallel zueinander angeordnete, aufeinander zubewegbare Greifelemente 43 vorgesehen sind, die jeweils in einer Ebene senkrecht zur Schwenkebene der Schwenkelemente 37 bewegbar sind. Wie aus Figur 9 erkennbar, sind die Greifelemente 43 von einer Haltestellung, in welcher Greifflächen 44 an Halteflächen 13 des Kopfes 10 der Stecksicherung 9 anliegen, in eine Losstellung überführbar, in welcher die Greifflächen 44 von den Halteflächen 13 beabstandet sind. zusätzlich verfügen die Greifelemente 43 über Stützflächen 45, mit welchen sie sich in Steckrichtung am Kopf 10 der Stecksicherung 9 in der Haltestellung stützen. Die Greifelemente 43 bilden eine Halteeinrichtung 59.

Wie aus Figur 9 erkennbar ist, werden die Greifelemente 43 durch Federn 46 in der Haltestellung vorgespannt. Durch eine Betätigungseinrichtung 47 können die Greifelemente von ihrer Haltestellung in die Losstellung überführt werden. Die Betätigungseinrichtung 47 verfügt dazu über Kolben 42, welche Druckluft betätigt auf die Greifelemente 43 entgegen der Federkraft der Federn 46 wirken.Die Greifelemente 43 sind dabei im Bestükkungskopf 4 geführt. Durch Muttern 49 läßt sich die Vorspannung der Federn 46 regulieren. Die Druckluft wird über Druckluftkanäle 50 im Bestückungskopf und Kolben 48 zugeführt. Den Kolben 42 wird die Druckluft über Druckluftanschlüsse 51 zugeführt.

Wie darüberhinaus aus Figur 8 ersichtlich ist, verfügt der Bestückungskopf 4 über eine Befestigung 52, mit welcher er an der Linearachse 23 befestigt ist. Zusätzlich ist der Bestückungskopf 4 in vertikaler Richtung verfahrbar. Dazu ist ein nicht in allen Einzelheiten beschriebener Kolben an der Befestigung 52 vorgesehen, mit dem der Bestückungskopf 4 von einer ersten, angehobenen Stellung in eine zweite, abgesenkte Stellung überführbar ist. Der Kolben wirkt auf eine Druckmeßdose 53 welche die Einsteckkraft überwacht und auf einen Stößel 54, der im Bestückungskopf 4 in vertikaler Richtung verschieblich gelagert ist und über einen Anschlag 55 verfügt. Eine sich im Bestükkungskopf 4 abstützende Druckfeder 56 spannt den Stößel 54 derart vor, daß er mit dem Anschlag 55 am Bestückungskopf 4 anliegt. Der federbelastete Stößel 54 ermöglicht ein zurückweichen des Bestückungskopfes 4, wenn eine Stecksicherung 9 in einen Stecksockel 7 eingesteckt wird, um Beschädigungen an den Stecksicherungen bzw. den Stecksockeln zu vermeiden. Die Druckmeßdose 53 gibt bei zu großer Einsteckkraft eine Fehlermeldung an eine elektronische Steuerung, welche den Einsteckvorgang unterbricht, um Schäden an Bestückungskopf 4 zu vermeiden.

Zur Erleichterung der Montage und der Fertigung, besteht der Bestückungskopf 4 aus im wesentlichen drei Gehäuseteilen 57, die jeweils durch teilweise nicht dargestellte Festigungselemente 58 miteinander verbunden sind.

Im folgenden wird die Wirkungs- und Funktionsweise der Erfindung näher beschrieben.

Um eine Stecksicherung 9 in den zugeordneten Stecksockel 7 einzustecken, wird zunächst die entsprechende Stecksicherung 9 aus der zugeordneten Bevorratungseinrichtung 24 dem sich in Ladestellung befindenen Schieber 30 zugeführt, wo die Stecksicherung 9 in der Aufnahme 26 aufgenommen wird. Wie aus Figur 7 ersichtlich ist, weisen die Kontakte 11 der Stecksicherung 9 in Förderrichtung nach vorne. Anschließend wird der Schieber von seiner Ladestellung in seine Zuführstellung überführt, wobei die Aufnahme 26 im wesentlichen quer zur Förderrichtung in den Kanal 27 der Bereitstellungseinrichtung 3 eingeschoben wird. Nun wird der Kanal 27 mit Preßluft beaufschlagt, in dem die Pumpe 5 Luft durch die Einblasöffnung 31 und die Öffnung 29 im Boden 28 der Aufnahme 26 in die Bereitstellungseinrichtung 3 einleitet, wobei die geförderte Luft auf die bereitgestellte Stecksicherung 9 trifft und diese durch den Kanal 27 und den Zuführschlauch 2 in den Bestückungskopf 4 fördert.

Damit es zu keiner Kollision zwischen geförderten Stecksicherungen 9 und sich in Zuführstellung befindenden Schiebern 30 kommt, befindet sich immer nur ein Schieber 30 in Zuführstellung. Die anderen Schieber 30 befinden sich in der Ladestellung und verscnließen gleichzeitig bzw. begrenzend abschnittsweise den Kanal 27. Dadurch, daß der Kanal 27 in den Zuführschlauch 2 mündet, werden die geförderten Stecksicherungen 9 direkt aus dem Kanal 27 in den Zuführschlauch 2 gefördert und von dort in den Bestückungskopf 4. Der Zuführschlauch 2 ist in seinem Querschnitt an die Form der Stecksicherungen 9 angepaßt, so daß sich die durch den Zuführschlauch 2 geförderte Luft während des Förderns der Stecksicherung 9 in Förderrichtung hinter der Stecksicherung 9 verdichtet, wodurch ein sicheres fördern der Stecksicherung 9 gewährleistet wird. Damit der Zuführschlauch 2 problemlos die Bewegungen der Positioniereinrichtung 21 mitmachen kann, besteht er aus elastischem Kunststoff. Um Knickstellen zu vermeiden, ist er im Bogen von der Bereitstellungseinrichtung 3 zum Bestückungskopf 4 geführt. Dadurch, daß sich der höchste Punkt des Zuführschlauches 2 zwischen der Bereitstellungseinrichtung 3 und dem Bestückungskopf 4 befindet, wird verhindert, daß Stecksicherungen 9 am bestückungskopfseitigen Endes des Zuführschlauches 2 stecken bleiben.

Während des Überführens des Schiebers 30 von seiner Ladestellung in seine Zuführstellung, kann die Positioniereinrichtung 21 den Bestückungskopf 4 in seine Montagestellung überführen, in welcher er einem bestimmten Stecksockel 7 zugeordnet ist. Die Verstellung erfolgt dabei über die Linearachsen 22 und 23. Mittels der nicht dargestellten Indexiereinheit, ist der Werkstückträger 14 und somit die Halterung 15 mit dem darauf befindlichen Sicherungskasten 6 gegenüber dem Bestückungskopf 4 arretiert.

Die durch den Zuführschlauch 2 geförderte Stecksicherung 9 gelangt zunächst in den Leitkanal 35 des Bestückungskopfes 4 und gelangt von dort in den Wirkungsbereich der Schwenkelemente 37, welche sich zunächst in der Fangstellung befinden. Die aus dem Zuführkanal 2 austretende Stecksicherung 9 gerät mit ihren Vorsprüngen 12 in Anlage mit den Fangflächen der Schwenkelemente 37 und wird dadurch zunächst in einer bestimmten, definierten Position gehalten. Anschließend werden die Greifelemente 43 von ihrer Losstellung in die Haltestellung überführt, wobei die Greifflächen 44 an den Stützflächen 45 der Stecksicherung 9 zur Anlage kommen, wodurch ein Kraftschluß zwischen den Greifelementen 43 und der Stecksicherung 9 entsteht. Nun werden die Schwenkelemente 37 der Fangeinrichtung 40 von ihrer Fangstellung in eine Freigabestellung überführt, wodurch die Fangflächen 38 und die Vorsprünge 12 der Stecksicherung außer Eingriff sich befinden. Sowohl die Bewegung der Schwenkelemente 37, als auch der Greifelemente 43 erfolgt durch ein gesteuertes Zuführen von Druckluft durch die Druckluftkanäle 50 bzw. die Druckluftanschlüsse 51.

Als nächstes wird der Bestückungskopf 4 von seiner ersten Stellung, in welcher die Stecksicherung 9 und der zugeordnete Stecksockel 7 voneinander beabstandet sind, in die zweite Stellung überführt, in welcher die Stecksicherung 9 mit ihren Kontakten 11 in den Stecksockel 7 eingesteckt ist. Diese Bewegung wird durch den Kolben 53 hervorgerufen, wobei durch den federbelastenden Stößel 54 eine in vertikaler Richtung wirkende Nachgiebigkeit des Bestückungskopfes 4 hervorgerufen wird, um Beschädigungen der Stecksicherungen bzw. des Stecksockels beim Einsetzen der Stecksicherung 9 zu verhindern. Um das Eindrücken der Stecksicherungen 9 zu unterstützen, wirken die Stützflächen 45 in vertikaler Richtung auf die Stecksicherung 9, die sich an den Stützflächen 45 während des Einsteckens abstützt.

Die Stecksicherung 9 ist nun in den Stecksockel 7 eingesteckt. Nun werden die Greifelemente 43 von ihrer Haltestellung in ihre Losstellung überführt, wodurch sie die Stecksicherung 9 freigeben. Anschließend wird der Bestückungskopf 4 von seiner zweiten in seine erste Stellung rücküberführt und werden die Schwenkelemente von ihrer Freigabestellung in die Fangstellung rücküberführt. Der Bestückungskopf 4 ist nun bereit zur Aufnahme der nächsten Stecksicherung 9.

Während des Einsteckvorganges kann bereits die als nächstes einzusteckende Stecksicherung in der Bereitstellungseinrichtung 3 zum Fördern bereitgestellt werden. Auf diese Weise lassen sich mehrere Vorgänge parallel schalten, wodurch sich die Montagezeit bzw. Bestückungszeit deutlich herabsetzen läßt. Durch das Fördern der Stecksicherungen 9 durch von der Pumpe 5 erzeugte Druckluft, läßt sich die Zuführzeit von der Bereitstellungseinrichtung 3 zum Bestückungskopf 4 erheblich reduzieren. Auf diese Weise werden extrem kurze Taktzeiten ermöglicht. Die Anordnung mit mehreren Bevorratungseinrichtungen, denen jeweils eine bestimmte Art Stecksicherungen 9 eines bestimmten Ampèrè Wertes zugeordnet ist, läßt sich mit Hilfe einer elektronischen Steuerung jeweils die entsprechende als nächstes zuzuführende Stecksicherung 9 der Bereitstellungseinrichtung 3 zuführen. Auf diese Weise lassen sich Sicherungskästen individuell mit Stecksicherungen 9 bestücken, je nach den gewünschten Anforderungen. So wäre es zum Beispiel denkbar, einen Barcodeleser vorzusehen, der einen am Werkstückträger 14 angebrachten Barcode liest und entsprechend die Ladeeinrichtungen 25, sowie die Bereitstellungseinrichtung 3 steuert, sowie die Positioniereinrichtung 21 ansteuert, um jeweils eine bestimmte Stecksicherung 9 einem bestimmten Stecksockel 7 zuzuordnen. Die erfindungsgemäße Vorrichtung wird dadurch äußerst flexibel und läßt ein individuelles Bestücken von Sicherungskästen 6 mit Stecksicherungen 9 zu.

## Patentansprüche

1. Verfahren zum Bestücken eines Sicherungskastens mit elektrischen Stecksicherungen (9), insbesondere für Kraftfahrzeuge, bei dem die Stecksicherungen von einer Bereitstellungseinrichtung (3) über einen im Querschnitt an die Form der Stecksicherungen angepaßten Zuführschlauch (2) einem Bestückungskopf (4) zum Einstecken der Stecksicherungen in Stecksockel (9) zugeführt werden, wobei der Zuführschlauch in den Bestückungskopf mündet,
**dadurch gekennzeichnet,**
daß der Bestückungskopf (4) gegenüber der Bereitstellungseinrichtung verfahrbar angeordnet ist und zum Bestücken von mehreren Stecksockeln des Sicherungskastens mit ihren jeweils zugeordneten Stecksicherungen in unterschiedliche Positionen verfahren wird, in denen jeweils die Stecksicherungen in die zugehörigen Stecksockeln eingesteckt werden, und daß zum Fördern der Stecksicherungen mittels einer Fördereinrichtung (3) Luft durch den Zuführschlauch (2) gefördert wird.

2. Verfahren nach Anspruch 1,
**dadurch gekennzeichnet,**
daß die Stecksicherungen (9) einzeln durch den Zuführschlauch (2) gefördert werden.

3. Verfahren nach Anspruch 1 oder 2,
**dadurch gekennzeichnet,**
daß Stecksicherungen (9) unterschiedlicher Ampèrè Werte, jedoch mit im wesentlichen gleichen Abmessungen durch den Zuführschlauch (2) gefördert werden.

4. Verfahren nach einem der vorangegangenen Ansprüche,
**dadurch gekennzeichnet,**
daß die Stecksicherungen (9) mittels Ladevorrichtungen (25) aus Bevorratungseinrichtungen (24) der Bereitstellungseinrichtung (3) zugeführt werden, um durch den Zuführschlauch (2) gefördert zu werden.

5. Verfahren nach einem der vorangegangenen Ansprüche,
**dadurch gekennzeichnet,**
daß jeweils in einer Bevorratungseinrichtung (24) Stecksicherungen (9) eines Ampèrè Wertes aufgenommen werden und jeweils eine Bevorratungseinrichtung (24) einer Ladevorrichtung (25) zugeordnet wird, die die Stecksicherungen (9) der Bereitstellungseinrichtung (3) zuführt.

6. Verfahren nach einem der vorangegangenen Ansprüche,
**dadurch gekennzeichnet,**
daß die Stecksicherungen (9) zunächst der Bereitstellungseinrichtung (39) zugeführt werden und anschließend durch Zuführen von Druckluft durch den Zuführschlauch (3) gefördert werden.

7. Verfahren nach einem der vorangegangenen Ansprüche,
**dadurch gekennzeichnet,**
daß während des Bestückens einer der Stecksicherungen durch den Bestückungskopf (4) eine Stecksicherung (9) des als nächstes zu montierenden Ampèrè Wertes der Bereitstellungseinrichtung (3) zugeführt wird.

8. Verfahren nach einem der vorangegangenen Ansprüche,
**dadurch gekennzeichnet,**
daß das Positionieren des Bestückungskopfes (4) während des Zuführens der als nächstes zu montierenden Stecksicherung (9) zur Bereitstellungseinrichtung (3) erfolgt.

9. Verfahren nach einem der vorangegangenen Ansprüche,
**dadurch gekennzeichnet,**
daß die Stecksicherung (9) erst nachdem die vorangegangene Stecksicherung den Bestückungskopf (4) verlassen hat durch den Zuführschlauch (2) gefördert wird.

10. Verfahren nach einem der vorangegangenen Ansprüche,
**dadurch gekennzeichnet,**
daß die durch den Zuführschlauch (2) geförderte Stecksicherung (9) zunächst durch eine sich in einer Fangstellung befindende Fangeinrichtung (40) aufgefangen wird, wobei sich Fangflächen (38) in Eingriff mit der Stecksicherung (9) befinden und anschließend eine Haltevorrichtung (59) von einer Losstellung, in welcher Greifelemente (43) von der Stecksicherung (9) beabstandet sind in eine Haltestellung überführt werden, in welcher die Greifelemente (43) an der Stecksicherung (9) anliegen und diese festhalten und anschließend die Fangeinrichtung (40) in eine Freigabestellung überführt wird, in welcher die Fangflächen (38) die Stecksicherung (9) freigibt.

11. Verfahren nach einem der vorangegangenen Ansprüche,
**dadurch gekennzeichnet,**
daß zum Einsetzen der Stecksicherung (9) in den Stecksockel (7) die sich in Haltestellung befindende Halteeinrichtung (59) von einer ersten Stellung, in welcher die Stecksicherung vom Sockel beabstandet ist, in eine zweite Stellung überführt wird, in welcher die Stecksicherung (9) in den Stecksockel (7) eingesteckt wird.

12. Verfahren nach einem der vorangegangenen Ansprüche,
**dadurch gekennzeichnet,**
daß während des Bestückungsvorganges der Sicherungskasten (6) genau positioniert und arretiert ist.

13. Vorrichtung zum Durchführen des Verfahrens nach einem der vorangegangenen Ansprüche zum Bestücken eines Sicherungskastens (6), insbesondere für Kraftfahrzeuge, mit elektrischen Stecksicherungen (9), die eine Bereitstellungseinrichtung (3) zum Bereitstellen der Stecksicherungen aufweist, die über einen im Querschnitt an die Form der Stecksicherungen angepaßten Zuführschlauch (2) mit einem Bestückungskopf (4) verbunden ist, wobei der Zuführschlauch in dem Bestückungskopf mündet und die Stecksicherungen über den Zuführschlauch von der Bereitstellungseinrichtung dem Bestückungskopf zuführbar sind,
**dadurch gekennzeichnet,**
daß der Bestückungskopf zum Bestücken von mehreren Stecksockeln des Sicherungskastens mit ihren jeweils zugeordneten Stecksicherungen gegenüber der Bereitstellungseinrichtung in verschiedene Positionen verfahrbar ist, in denen jeweils die Stecksicherungen in die zugehörigen Stecksockel einsteckbar sind und daß eine Fördereinrichtung (4) zum Fördern von Luft durch den Zuführschlauch vorgesehen ist, wobei ein Fördern der Luft ein Fördern der Stecksicherungen durch den Zuführschlauch bewirkt.

14. Verfahren nach einem der Ansprüche 1 bis 12,
**dadurch gekennzeichnet,**
daß in der Bereitstellungseinrichtung (3) zumindest eine der Stecksicherungen (9) in einer vorherbestimmten Stellung bereitstellbar ist, um dem Zuführschlauch (2) zuführbar zu sein.

15. Vorrichtung nach Anspruch 13,
**dadurch gekennzeichnet,**
daß in der Bereitstellungseinrichtung (3) zumindest eine Ladeeinrichtung (25) vorgesehen ist, die von einer Ladestellung, in welcher die Ladeeinrichtung (25) zumindest eine Stecksicherung (9) aufnehmen kann, in eine Zuführstellung überführbar ist, durch welche wenigstens eine Stecksicherung (9) in der vorherbestimmten Lage in der Bereitstellungseinrichtung (3) bereitgestellt ist.

16. Verfahren nach einem der vorangegangenen Verfahrensansprüche,
**dadurch gekennzeichnet,**
daß mehrere Ladeeinrichtungen (25) vorgesehen sind, wovon jeweils nur eine sich in der Zuführstellung befindet.

17. Verfahren nach einem der vorangegangenen Verfahrensansprüche,
**dadurch gekennzeichnet,**
daß Stecksicherungen unterschiedlicher Ampèrè Werte zuführbar sind, deren äußere Form jeweils im wesentlichen identisch ist, wobei jeweils nur Stecksicherungen eines Ampèrè Wertes zumindest einer Ladeeinrichtung (25) zugeordnet sind.

18. Vorrichtung nach einem der Ansprüche 13 oder 15,
**dadurch gekennzeichnet,**
daß jeweils nur eine Stecksicherung (9) des als nächstes zu montierenden Ampèrè Wertes bereitstellbar ist.

19. Verfahren nach einem der vorangegangenen Verfahrenansprüche,
**dadurch gekennzeichnet,**
daß die Ladeeinrichtungen (25) als Schieber (30) ausgebildet sind, die im wesentlichen quer zur Förderrichtung der Stecksicherung von der Ladestellung in die Zuführstellung überführbar sind.

20. Vorrichtung nach einem der vorangegangenen Vorrichtungsansprüche,
**dadurch gekennzeichnet,**
daß die Schieber (30) entlang eines der Bereitstellungseinrichtung (3) vorgesehenen Kanals (27) im wesentlichen hintereinander angeordnet sind, welcher Kanal (27) in den Zuführschlauch (2) mündet.

21. Vorrichtung nach einem der vorangegangenen Vorrichtungsansprüche,
**dadurch gekennzeichnet,**
daß die Schieber (30) zumindest eine im wesentlichen topfförmige Aufnahme (26) zur Aufnahme einer Stecksicherung (9) aufweisen, und der in Förderrichtung rückwärtige Boden (28) der Aufnahme (26) mit einer Öffnung (29) versehen ist.

22. Vorrichtung nach einem der vorangegangenen Vorrichtungsansprüche,
**dadurch gekennzeichnet,**
daß Bevorratungseinrichtungen (24) vorgesenen sind, aus welchen den Ladeeinrichtungen (25) in der Ladestellung Stecksicherungen (9) zuführbar sind.

23. Vorrichtung nach einem der vorangegangenen Vorrichtungsansprüche,
**dadurch gekennzeichnet,**
daß jeweils eine Bevorratungseinrichtung (24) einer Ladeeinrichtung (25) zugeordnet ist.

24. Vorrichtung nach einem der vorangegangenen Vorrichtungsansprüche,
**dadurch gekennzeichnet,**
daß die Bevorratungseinrichtung (24) zumindest einen Vibrationswendelförderer aufweist.

25. Vorrichtung nach einem der vorangegangenen Vorrichtungsansprüche,
**dadurch gekennzeichnet,**
daß die Fördereinrichtung zum Fördern der Luft eine Pumpe (5) ist, die die Luft durch eine Einblasöffnung (31) am in Förderrichtung rückwärtigen Ende des Kanals (27) der Bereitstellungseinrichtung (3) fördert.

26. Vorrichtung nach einem der vorangegangenen Vorrichtungsansprüche,
**dadurch gekennzeichnet,**
daß die Stecksicherung (9) mit ihren Kontakten (11) beim Fördern in Förderrichtung nach vorne weisend angeordnet ist.

27. Vorrichtung nach einem der vorangegangenen Vorrichtungsansprüche,
**dadurch gekennzeichnet,**
daß der Zuführschlauch (2) im wesentlichen bogenförmig von der Bereitstellungseinrichtung (3) zum Bestückungskopf (4) verläuft.

28. Vorrichtung nach einem der vorangegangenen Vorrichtungsansprüche,
**dadurch gekennzeichnet,**
daß das Einstecken der Stecksicherung (9) in den Stecksockel (7) in im wesentlichen vertikaler Richtung erfolgt und der Zuführschlauch (2) bestückungskopfseitig im wesentlichen parallel zur Steckrichtung verläuft.

29. Vorrichtung nach einem der vorangegangenen Vorrichtungsansprüche,
**dadurch gekennzeichnet,**
daß der Kanal (27) der Bereitstellungseinrichtung (3) im wesentlichen vertikal verläuft und der Zuführschlauch bereitstellungseinrichtungsseitig im wesentlichen parallel zur Längsachse des Kanals (27) verläuft.

30. Vorrichtung nach einem der vorangegangenen Vorrichtungsansprüche,
**dadurch gekennzeichnet,**
daß der höchste Punkt des Zuführschlauches (2) zwischen Bestükkungskopf (4) und Bereitstellungseinrichtung (3) angeordnet ist.

31. Vorrichtung nach einem der vorangegangenen Vorrichtungsansprüche,
**dadurch gekennzeichnet,**
daß der Zuführschlauch (2) im wesentlichen rechteckig im Querschnitt ist.

32. Vorrichtung nach einem der vorangegangenen Vorrichtungsansprüche,
**dadurch gekennzeichnet,**
daß der Zuführschlauch (2) aus flexiblem Kunststoff besteht.

33. Vorrichtung nach einem der vorangegangenen Vorrichtungsansprüche,
**dadurch gekennzeichnet,**
daß eine Positioniereinrichtung (21) für den Bestückungskopf (4) vorgesehen ist, um den Bestückungskopf (4) in eine Einsteckstellung zum Sicherungskasten (6) anzuordnen, in welcher die Stecksicherung (9) in den Stecksockel (7) des Sicherungskastens (6) einsteckbar ist.

34. Vorrichtung nach einem der vorangegangenen Vorrichtungsansprüche,
**dadurch gekennzeichnet,**
daß die Positioniereinrichtung (21) zwei im wesentlichen rechtwinklig zueinander angeordnete Positionierachsen (22, 23) aufweist.

35. Vorrichtung nach einem der vorangegangenen Vorrichtungsansprüche,
**dadurch gekennzeichnet,**
daß die Positionierachsen (22, 23) im wesentlichen horizontal angeordnet sind.

36. Vorrichtung nach einem der vorangegangenen Vorrichtungsansprüche,
**dadurch gekennzeichnet,**
daß der Bestückungskopf (4) eine Fangeinrichtung (40) zum Auffangen der aus dem Zuführschlauch (2) austretenden Stecksicherungen (9) sowie eine Halteeinrichtung (59) zum Halten der Stecksicherungen (9) während des Einsteckens in Steckrichtung aufweist.

37. Vorrichtung nach einem der vorangegangenen Vorrichtungsansprüche,
**dadurch gekennzeichnet,**
daß die Halteeinrichtung in Steckrichtung bewegbar ist, um die Stecksicherungen (9) in den Stecksockel (7) des Sicherungskastens (6) einzusetzen.

38. Vorrichtung nach einem der vorangegangenen Vorrichtungsansprüche,
**dadurch gekennzeichnet,**
daß die Fangeinrichtung (40) zwei Fangflächen (38) aufweist, die von einer Fangstellung, in welcher die Fangflächen (38) mit kopfseitigen Vorsprüngen (12) der Stecksicherung (9) in Eingriff sich befinden, wobei die aus dem Zuführschlauch (2) austretende Stecksicherung (9) sich im wesentlichen in Förderrichtung an den Fangflächen (38) abstützt, in eine Freigabestellung überführbar sind, in welcher die Fangflächen (38) weiter voneinander beabstandet sind als in der Fangstellung, so daß die Stecksicherung (9) freigegeben ist.

39. Vorrichtung nach einem der vorangegangenen Vorrichtungsansprüche,
**dadurch gekennzeichnet,**
daß die Halteeinrichtung Greifelemente (43) aufweist, die stirnseitig am Kopf (10) handelsüblicher Stecksicherungen (9) angreifen und von einer Haltestellung, in welcher die Greifelemente (43) die Stecksicherung (9) zum Einstecken halten, in eine Losstellung überführbar sind, in welcher die Greifelemente und die Stecksicherung (9) voneinander getrennt sind.

40. Vorrichtung nach einem der vorangegangenen Vorrichtungsansprüche,
**dadurch gekennzeichnet,**
daß die Greifelemente mit Stützflächen (45) aufweisen, an denen sich die Stecksicherung (9) beim Einstecken entgegen der Steckrichtung abstützt.

41. Vorrichtung nach einem der vorangegangenen Vorrichtungsansprüche,
**dadurch gekennzeichnet,**
daß der Sicherungskasten (6) mit einer Transportvorrichtung (18) wirkungsverbunden ist, welche den Sicherungskasten zumindest in der Einsteckstellung zum Bestückungskopf (4) arretiert.

## Claims

1. Process of fitting a fuse box with electrical plug-in fuses (9), in particular for motor vehicles, where the plug-in fuses are delivered by a providing device (3) via a delivery hose (2), which cross-sectionally matches the shape of the plug-in fuses, to a supply head (4) for plugging the plug-in fuses into a socket (9), and the delivery hose merges into the supply head, **characterised in that** the supply head (4) is arranged to be movable relative to the providing device and is moved into different positions in which the plug-in fuses are respectively plugged into the associated sockets, for the purpose of supplying a plurality of sockets of the fuse box with their respective associated plug-in fuses, and air is conveyed through the delivery hose (2) for the purpose of conveying the plug-in fuses by means of a conveying device (3).

2. Process according to Claim 1, **characterised in that** the plug-in fuses (9) are individually conveyed through the delivery hose (2).

3. Process according to Claim 1 or 2, **characterised in that** plug-in fuses (9) of different ampere values, however of essentially identical dimensions are conveyed through the delivery hose (2).

4. Process according to one of the above claims, **characterised in that** the plug-in fuses (9) are delivered by means of loading devices (25) from storage devices (24) of the providing device (3) in order to be conveyed through the delivery hose (2).

5. Process according to one of the above claims, **characterised in that** plug-in fuses (9) of one and the same ampere value are accommodated in a respective storage device (24), and a respective storage device (24) is associated to a loading device (25) which delivers the plug-in fuses (9) to the providing device (3).

6. Process according to one of the above claims, **characterised in that** the plug-in fuses (9) are initially delivered to the providing device (39) and thereafter conveyed by introduction of compressed air through the delivery hose (3).

7. Process according to one of the above claims, **characterised in that** during a supply of one of the plug-in fuses by the supply head (4) a plug-in fuse (9) of the next ampere value to be fitted is delivered to the providing device (3).

8. Process according to one of the above claims, **characterised in that** positioning of the supply head (4) takes place whilst the next plug-in fuse (9) to be fitted is delivered to the providing device (3).

9. Process according to one of the above claims, **characterised in that** the plug-in fuse (9) is conveyed through the delivery hose (2) only after the previous plug-in fuse has left the supply head (4).

10. Process according to one of the above claims, **characterised in that** the plug-in fuse (9) which is conveyed through the delivery hose (2) is initially caught by a catching device (40) which is in its catching position, and catching surfaces (38) are in engagement with the plug-in fuse (9), and thereafter a holding device (59) is transferred from a loose position, in which grabbing elements (43) are distanced from the plug-in fuse (9), into a holding position, in which the grabbing elements (43) abut the plug-in fuse (9) and hold the latter, and thereafter the catching device (40) is transferred into a release position in which the catching surfaces (38) release the plug-in fuse (9).

11. Process according to one of the above claims, **characterised in that,** for the purpose of inserting the plug-in fuse (9) into the socket (7), the holding device (59), which is in its holding position, is transferred from a first position, in which the plug-in fuse is distanced from the socket, into a second position, in which the plug-in fuse (9) is plugged into the socket (7).

12. Process according to one of the above claims, **characterised in that** the fuse box (6) is during a fitting process precisely positioned and arrested.

13. Device for carrying out the process according to one of the above claims for fitting a fuse box (6), in particular for motor vehicles, with electric plug-in fuses (9), comprising a providing device (3) for providing the plug-in fuses, which is connected via a delivery hose (2), which is cross-sectionally matched to the form of the plug-in fuses, to a supply head (4), and the delivery hose merges into the supply head, and the plug-in fuses are deliverable from the providing device via the delivery hose to the supply head, **characterised in that** the supply head is, for the purpose of fitting a plurality of sockets of the fuse box with the respectively associated plug-in fuses, movable into different positions relative to the providing device in which the respective plug-in fuses are insertible into the associated sockets, and a conveying device (4) for conveying air through the delivery hose is provided, and conveying air causes plug-in fuses to be conveyed through the delivery hose.

14. Process according to one of Claims 1 to 12, **characterised in that** in the providing device (3) at least one of the plug-in fuses can be made available in a predetermined position so as to be deliverable to the delivery hose (2).

15. Device according to Claim 13, **characterised in that** in the providing device (3) is provided at least one loading device (25) which is transferable from a loading position, in which the loading device (25) can receive at least one plug-in fuse (9), into a delivery position by means of which at least one plug-in fuse (9) is provided in the predetermined position in the providing device (3).

16. Process according to one of the above claims, **characterised in that** a plurality of loading devices (25) is provided, of which only one at a time is in a delivery position.

17. Process according to one of the above procedural claims, **characterised in that** plug-in fuses of different ampere values are deliverable, the outer form of which is essentially identical, and only plug-in fuses of one and the same ampere value are respectively associated with one loading device (25).

18. Process according to one of Claims 13 or 15, **characterised in that** only one respective plug-in fuse (9) of the next ampere value to be mounted is made available.

19. Process according to one of the above procedural claims, **characterised in that** the loading devices (25) are designed as slides (30) which are essentially transferable transversely to the conveying direction of the plug-in fuse from the loading position into the delivery position.

20. Device according to one of the above procedural claims, **characterised in that** the slides (30) are arranged essentially one behind the other along a channel (27), which is provided for the providing device (3) and merges into the delivery hose (2).

21. Device according to one of the above procedural claims, **characterised in that** the slides (30) comprise an at least essentially troughshaped receptacle (26) for receiving a plug-in fuse (9), and the rear bottom (28) of the receptacle, as seen in the conveying direction, is provided with an opening (29).

22. Device according to one of the above procedural claims, **characterised in that** storage devices (24) are provided from where plug-in fuses (9) are deliverable to loading devices (25) in a loading position.

23. Device according to one of the above procedural claims, **characterised in that** a respective storage device (24) is associated with a loading device (25).

24. Device according to one of the above procedural claims, **characterised in that** the storage device (24) comprises at least one vibrating helical conveyer.

25. Device according to one of the above procedural claims, **characterised in that** the conveying device for conveying air is a pump (5) which conveys the air through a blow-in opening (31) at the rear end of the channel (27) of the providing device (3), as seen in the conveying direction.

26. Device according to one of the above procedural claims, **characterised in that** the plug-in fuse (9) is configured to face forward with its contacts (11), as seen in the conveying direction, whilst being conveyed.

27. Device according to one of the above procedural claims, **characterised in that** the delivery hose (2) extends essentially arclike from the providing device (3) to the supply head (4).

28. Device according to one of the above procedural claims, **characterised in that** the plug-in fuse (9) is plugged into the socket (7) essentially in the vertical direction, and the delivery hose (2) extends at the fitting side essentially parallel to the plug-in direction.

29. Device according to one of the above procedural claims, **characterised in that** the channel (27) of the providing device (3) extends essentially vertically, and the delivery hose at the side of the providing device extends essentially parallel to the longitudinal axis of the channel (27).

30. Device according to one of the above procedural claims, **characterised in that** the highest point of the delivery hose (2) is arranged between the supply head (4) and the providing device (3).

31. Device according to one of the above procedural claims, **characterised in that** the delivery hose (2) is essentially cross-sectionally rectangular.

32. Device according to one of the above procedural claims, **characterised in that** the delivery hose (2) is made of a flexible plastic material.

33. Device according to one of the above procedural claims, **characterised in that** a positioning device (21) for the supply head (4) is provided so as to arrange the supply head (4) in a plug-in position relative to the fuse box (6) into which the plug-in fuse (9) is plugged into the socket (7) of the fuse box (6).

34. Device according to one of the above procedural claims, **characterised in that** the positioning device (21) comprises two positioning axes (22, 23) which are essentially arranged rectangularly to each other.

35. Device according to one of the above procedural claims, **characterised in that** the positioning axes (22, 23) are essentially horizontally arranged.

36. Device according to one of the above procedural claims, **characterised in that** the supply head (4) comprises a catching device (4) for catching plug-in fuses (9) exiting from the delivery hose (2) and a holding device (59) for holding the plug-in fuses (9) whilst being plugged into in the plugging direction.

37. Device according to one of the above procedural claims, **characterised in that** the holding device is movable in the plug-in direction so as to insert the plug-in fuses (9) into the socket (7) of the fuse box (6).

38. Device according to one of the above procedural claims, **characterised in that** the catching device (40) comprises two catching surfaces (38) which are transferable from one catching position, in which the catching surfaces (38) are located with headsided protrusions (12) of the plug-in fuse (9) engaged and the plug-in fuse (9) exiting the delivery hose (2) supports itself essentially in the conveying direction against the catching surfaces (38), into a release position, in which the catching surfaces (38) are spaced further apart from each other than in the catching position, so that the plug-in fuse (9) is released.

39. Device according to one of the above procedural claims, **characterised in that** the holding device comprises grabbing elements (43) which engage at the end of the head (10) of commercially available plug-in fuses (9) and which are transferable from a holding position, in which the grabbing elements (43) hold the plug-in fuse (9) for plugging in, into a loose position in which the grabbing elements and the plug-in fuse (9) are separated from each other.

40. Device according to one of the above procedural claims, **characterised in that** the grabbing elements comprise support surfaces (45) against which the plug-in fuse (9) supports itself whilst plugging in against the plug-in direction.

41. Device according to one of the above procedural claims, **characterised in that** the fuse box (6) is effectively joined to a transport device (18) which arrests the fuse box at least in the plug-in position relative to the supply head (4).

## Revendications

1. Procédé pour équiper une boîte à fusibles avec des fusibles électriques (9), en particulier pour des véhicules automobiles, dans lequel les fusibles sont amenés par un dispositif de préparation (36) par l'intermédiaire d'un tuyau d'amenée (2) à section transversale adaptée à la forme des fusibles, à une tête d'équipement (4), pour enficher les fusibles dans des prises (7), le tuyau d'amenée débouchant dans la tête d'équipement,
caractérisé en ce que,
la tête d'équipement (4) est disposée déplaçable par rapport au dispositif de préparation et étant déplacée pour équiper plusieurs prises de la boîte à fusibles, avec ses fusibles chaque fois associés, en différentes positions dans chacune desquelles les fusibles sont enfichés dans les prises afférentes, et en ce que de l'air est véhiculé dans le tuyau d'amenée (2) pour véhiculer les fusibles au moyen d'un dispositif transporteur (3).

2. Procédé selon la revendication 1, caractérisé en ce que les fusibles (9) sont véhiculés individuellement dans le tuyau d'amenée (2).

3. Procédé selon la revendication 1 ou 2, caractérisé en ce que des fusibles (9) présentant des ampérages différents, cependant ayant des dimensions sensiblement identiques, sont véhiculés dans le tuyau d'amenée (2).

4. Procédé selon l'une des revendications précédentes, caractérisé en ce que les fusibles (9) sont amenés au moyen de dispositifs de chargement (25), depuis les dispositifs de stockage (24) du dispositif de préparation (3), pour être véhiculés dans le tuyau d'amenée (2).

5. Procédé selon l'une des revendications précédentes, caractérisé en ce que des fusibles (9) d'un ampérage donné sont logés chaque fois dans un dispositif de stockage (24) et chaque fois un dispositif de stockage (24) est associé à un dispositif de chargement (25) qui amène les fusibles (9) au dispositif de préparation (3).

6. Procédé selon l'une des revendications précédentes, caractérisé en ce que les fusibles (9) sont d'abord amenés au dispositif de préparation (39) et sont ensuite transportés dans le tuyau d'amenée (3), par amenée d'air comprimé.

7. Procédé selon l'une des revendications précédentes, caractérisé en ce que, pendant l'équipement d'un des fusibles par la tête d'équipement (4), un fusible (9), de la valeur d'ampérage subséquente à monter, est amené au dispositif de préparation (3).

8. Procédé selon l'une des revendications précédentes, caractérisé en ce qu'on procède au positionnement de la tête d'équipement (4) pendant l'amenée du fusible (9) devant être le suivant à monter par rapport au dispositif de préparation (3).

9. Procédé selon l'une des revendications précédentes, caractérisé en ce que le fusible (9) n'est véhiculé à travers le tuyau d'amenée (2) qu'après que le fusible précédent a quitté la tête d'équipement (4).

10. Procédé selon l'une des revendications précédentes, caractérisé en ce que le fusible (9) véhiculé dans le tuyau d'amenée (2) est d'abord capté au moyen d'un dispositif de captage (40) placé dans une position de captage, des surfaces de captage (38) étant mises en prise avec le fusible (9), puis un dispositif de maintien (59) étant passé d'une position de libération, dans laquelle des éléments de préhension (43) sont espacés du fusible (9), à une position de maintien, dans laquelle les éléments de préhension (43) sont en appui sur le fusible (9) et le maintiennent fixé, puis le dispositif de captage (40) est passé en une position de libération, dans laquelle les faces de captage (38) libèrent le fusible (9).

11. Procédé selon l'une des revendications précédentes, caractérisé en ce que pour insérer le fusible (9) dans la prise (7), le dispositif de maintien (59) se trouvant en position de maintien est passé d'une première position, dans laquelle le fusible est espacé du socle, à une deuxième position, dans laquelle le fusible (9) est enfiché dans la prise (7).

12. Procédé selon l'une des revendications précédentes, caractérisé en ce que, pendant le processus d'équipement, la boîte à fusibles (6) est positionnée de façon précise et immobilisée.

13. Dispositif de mise en oeuvre du procédé selon l'une des revendications précédentes pour équiper une boîte à fusibles (6) en particulier pour des véhicules automobiles, avec des fusibles électriques (9), qui présente un dispositif de préparation (3) pour préparer les fusibles, qui est relié par un tuyau d'amenée (2) à section transversale adaptée à la forme des fusibles, à une tête d'équipement (4), le tuyau d'amenée débouchant dans la tête d'équipement et les fusibles étant susceptibles d'être amenés, par le tuyau d'amenée, du dispositif de préparation à la tête d'équipement,
caractérisé en ce que,
la tête d'équipement est déplaçable par rapport au dispositif de préparation en différentes positions pour équiper plusieurs prises de la boîte à fusibles, avec leurs fusibles respectifs, le déplacement se faisant dans chacune desquelles les fusibles sont susceptibles d'être enfichés dans la prise à enfichage afférente, et en ce qu'un dispositif de transport (4) est prévu pour véhiculer de l'air à travers le tuyau d'amenée, un transport d'air provoquant un transport des fusibles dans le tuyau d'amenée.

14. Procédé selon l'une des revendications 1 à 12, caractérisé en ce que au moins l'un des fusibles (9) peut être préparé, dans le dispositif de préparation (3), dans une position prédéterminée pour pouvoir être ramené au tuyau d'amenée (2).

15. Dispositif selon la revendication 13, caractérisé en ce que dans le dispositif de préparation (3) est prévu au moins un dispositif de chargement (25) qui est susceptible être passé d'une position de chargement, dans laquelle le dispositif de chargement (25) peut supporter au moins un fusible (9) à une position d'amenée, dispositif de chargement au moyen duquel au moins un fusible (9) se trouvant dans la position prédéterminée est préparé dans le dispositif de préparation (3).

16. Procédé selon l'une des revendications de procédé précédentes, caractérisé en ce que plusieurs dispositifs de chargement (25) sont prévus, dont chaque fois un seul se trouve en position d'amenée.

17. Procédé selon l'une des revendications de procédé précédentes, caractérisé en ce que des fusibles de différents ampérages peuvent être amenés, dont la forme extérieure est chaque fois pratiquement identique, à chaque fois seuls les fusibles d'un ampérage étant associés à au moins un dispositif de chargement (25).

18. Dispositif selon l'une des revendications 13 ou 15, caractérisé en ce qu'à chaque fois seul un fusible (9) de la valeur d'ampérage allant être subséquemment montée est susceptible être préparé.

19. Procédé selon l'une des revendications de procédé précédentes, caractérisé en ce que les dispositifs de chargement (25) sont réalisés sous la forme de coulisseaux (30), pouvant être passés de la position de chargement à la position d'amenée, en évoluant pratiquement transversalement à la direction de transport du fusible.

20. Dispositif selon l'une des revendications de dispositif précédentes, caractérisé en ce que les coulisseaux (30) sont disposés sensiblement les uns derrière les autres le long d'un canal (27) prévu dans le dispositif de préparation (3), le canal (27) débouchant dans le tuyau d'amenée (2).

21. Dispositif selon l'une des revendications de dispositif précédentes, caractérisé en ce que les coulisseaux (30) présentent au moins un logement (26) sensiblement en forme de pot pour recevoir un fusible (9), et le fond (28), situé à l'arrière dans la direction de transport, du logement (26) étant doté d'une ouverture (29).

22. Dispositif selon l'une des revendications de dispositif précédentes, caractérisé en ce que sont prévus des dispositifs de stockage (24), d'où des fusibles (9) peuvent être amenés au dispositif de chargement (25) lorsqu'on est en position de chargement.

23. Dispositif selon l'une des revendications de dispositif précédentes, caractérisé en ce qu'un dispositif de stockage (24) est chaque fois associé à un dispositif de chargement (25).

24. Dispositif selon l'une des revendications de dispositif précédentes, caractérisé en ce que le dispositif de stockage (24) présente au moins un transporteur à hélice vibrante.

25. Dispositif selon l'une des revendications de dispositif précédentes, caractérisé en ce que le dispositif de transport destiné à véhiculer l'air est une pompe (5) qui véhicule l'air à travers une ouverture d'insufflation (31) sur l'extrémité située à l'arrière dans la direction de transport du canal (27) du dispositif de préparation (3).

26. Dispositif selon l'une des revendications de dispositif précédentes, caractérisé en ce que le dispositif de sécurité (9) est disposé avec ses contacts (11) tournés vers l'avant dans la direction de transport lorsque l'on effectue le transport.

27. Dispositif selon l'une des revendications de dispositif précédentes, caractérisé en ce que le tuyau d'amenée (2) s'étend sensiblement en forme d'arc, du dispositif de préparation (3) à la tête d'équipement (4).

28. Dispositif selon l'une des revendications de dispositif précédentes, caractérisé en ce que l'enfichage du fusible (9) dans le socle à enfichage (7) s'effectue sensiblement en direction verticale, et le tuyau d'amenée (2) s'étend, côté tête d'équipement, sensiblement parallèlement à la direction d'enfichage.

29. Dispositif selon l'une des revendications de dispositif précédentes, caractérisé en ce que le canal (27) du dispositif de préparation (3) s'étend sensiblement verticalement et le tuyau d'amenée s'étend du côté du dispositif de préparation, sensiblement parallèlement à l'axe longitudinal du canal (27).

30. Dispositif selon l'une des revendications de dispositif précédentes, caractérisé en ce que le point le plus haut du tuyau d'amenée (2) est disposé entre la tête d'équipement (4) et le dispositif de préparation (3).

31. Dispositif selon l'une des revendications de dispositif précédentes, caractérisé en ce que le tuyau d'amenée (2) est à section transversale sensiblement rectangulaire.

32. Dispositif selon l'une des revendications de dispositif précédentes, caractérisé en ce que le tuyau d'amenée (2) est constitué d'une matière plastique flexible.

33. Dispositif selon l'une des revendications de dispositif précédentes, caractérisé en ce qu'un dispositif de positionnement (21) destiné à la tête d'équipement (4) est prévu pour disposer la tête d'équipement (4) dans une position d'enfichage par rapport à la boîte à fusibles (6), position dans laquelle le fusible (9) est susceptible d'être enfiché dans la prise (7) de la boîte à fusibles (6).

34. Dispositif selon l'une des revendications de dispositif précédentes, caractérisé en ce que le dispositif de positionnement (21) présente deux axes de positionnement (22, 23) disposés sensiblement perpendiculairement l'un par rapport à l'autre.

35. Dispositif selon l'une des revendications de dispositif précédentes, caractérisé en ce que les axes de positionnement (22, 23) sont disposés sensiblement horizontalement.

36. Dispositif selon l'une des revendications de dispositif précédentes, caractérisé en ce que la tête d'un équipement (4) présente un dispositif de captage (40) pour capter les fusibles (9) sortant du tuyau d'amenée (2) ainsi qu'un dispositif de maintien (59) pour maintenir les fusibles (9) pendant l'enfichage, en direction d'enfichage.

37. Dispositif selon l'une des revendications de dispositif précédentes, caractérisé en ce que le dispositif de maintien est déplacable en direction d'enfichage pour insérer les fusibles (9) dans la prise (7) de la boîte à fusibles (6).

38. Dispositif selon l'une des revendications de dispositif précédentes, caractérisé en ce que le dispositif de captage (40) présente deux faces de captage (38) qui sont susceptibles d'être passées d'une position de captage dans laquelle les faces de captage (38) sont en prise avec des saillies (12) situées côté tête du fusible (9), le fusible (9) sortant du tuyau d'amenée (2), prenant appui sensiblement dans la direction d'alimentation sur les faces de captage (38), à une position de libération, dans laquelle les faces de captage (38) sont espacées les unes des autres plus amplement que dans les positions de captage, si bien que le fusible (9) est libéré.

39. Dispositif selon l'une quelconque des revendications de dispositif précédentes, caractérisé en ce que le dispositif de maintien présente des éléments de préhension (43) qui agissent du côté frontal sur la tête (10) de fusibles (9) du commerce et qui doivent être passés d'une position de maintien, dans laquelle les éléments de préhension (43) maintiennent le fusible (9) pour l'enfichage, à une position de libération, dans laquelle les éléments de préhension et le fusible (9) sont séparés les uns des autres.

40. Dispositif selon l'une quelconque des revendications de dispositif précédentes, caractérisé en ce que les éléments de préhension présentent des surfaces d'appui (45) sur lesquelles le fusible (9) prend appui à l'encontre de la direction d'enfichage, lors de l'enfichage.

41. Dispositif selon l'une quelconque des revendications de dispositif précédentes, caractérisé en ce que la boite à fusibles (6) est reliée fonctionnellement à un dispositif de transport (18) qui immobilise la boîte à fusibles par rapport à la tête d'équipement (4), au moins dans la position d'enfichage.
